# EUROPEAN PATENT SPECIFICATION

(11) **EP 4 187 647 B1**
(45) Date of publication and mention of the grant of the patent: **14.01.2026**
(21) Application number: 22838032.5
(22) Date of filing: 08.07.2022
(51) Int. Cl.: H01M 4/36, H01M 4/38, H01M 4/62, H01M 4/13, H01M 4/139, H01M 10/052, C01B 32/198, H01M 4/02, H01M 4/133, H01M 4/1393, H01M 4/58, H01M 4/583

(54) **CATHODE FOR LITHIUM-SULFUR BATTERY, AND LITHIUM-SULFUR BATTERY COMPRISING SAME**
KATHODE FÜR LITHIUM-SCHWEFEL-BATTERIE UND LITHIUM-SCHWEFEL-BATTERIE DAMIT
CATHODE POUR BATTERIE AU LITHIUM-SOUFRE ET BATTERIE AU LITHIUM-SOUFRE LA COMPRENANT

(30) Priority: 09.07.2021 KR 20210090243; 07.07.2022 KR 20220083460
(43) Date of publication of application: 31.05.2023
(73) Proprietor: LG Energy Solution, Ltd., Seoul 07335 (KR)
(72) Inventor: KANG, Da Young, Daejeon 34122 (KR); YANG, Seungbo, Daejeon 34122 (KR); LEE, Changhoon, Daejeon 34122 (KR); SONG, Myeongjun, Daejeon 34122 (KR)
(74) Representative: Goddar, Heinz J.
(86) International application number: PCT/KR2022/009897
(87) International publication number: WO 2023/282680

(56) References cited:
- EP-A1- 3 783 703
- WO-A1-2021/137635
- KR-A- 20040 026 207
- KR-A- 20170 042 615
- KR-A- 20170 081 840
- KR-A- 20170 099 915
- KR-A- 20200 064 332
- KR-A- 20200 064 332
- US-B2- 10 170 766

## Description

### [Technical Field]

The present application claims the benefit of Korean Patent Application No. 10-2021-0090243 on July 9, 2021 and Korean Patent Application No. 10-2022-0083460 on July 7, 2022 with the Korean Intellectual Property Office.

The present disclosure relates to a positive electrode for a lithium-sulfur battery and a lithium-sulfur battery comprising the same.

### [Background Art]

As the scope of application of lithium secondary batteries expands not only to portable electronic devices and communication devices, but also to electric vehicles (EV) and electric storage systems (ESS), demands for high capacity of lithium secondary batteries used as a power source thereof have increased.

Among various lithium secondary batteries, a lithium-sulfur battery is a battery system using a sulfur series material including a sulfur-sulfur bond as a positive electrode active material, and using lithium metal, a carbon-based material having lithium ion intercalation/deintercalation, or silicon, tin or the like forming an alloy with lithium as a negative electrode active material.

Sulfur, which is a main material of a positive electrode active material in a lithium-sulfur battery, has advantages that it has a low atomic weight, is readily supplied due to abundant resources, is low in price, is not toxic, and is environmental-friendly.

In addition, a lithium-sulfur battery has theoretical discharging capacity of up to 1,675 mAh/g, which is obtained from a conversion reaction of lithium ions and sulfur (S₈+16Li⁺+16e⁻→8Li₂S) in a positive electrode, and when using lithium metal (theoretical capacity: 3,860 mAh/g) as a negative electrode, has theoretical energy density of 2,600 Wh/kg. This is a very high numerical value compared to theoretical energy density of other battery systems currently under study (Ni-MH battery: 450 Wh/kg, Li-FeS battery: 480 Wh/kg, Li-MnO₂ battery: 1,000 Wh/kg, Na-S battery: 800 Wh/kg) and a lithium ion battery (250 Wh/kg), and therefore, the lithium-sulfur battery, among secondary batteries that have been developed so far, is attracting attention as a high capacity, environmental-friendly, and low-cost lithium secondary battery, and various studies thereon are being made as a next-generation battery system.

In a lithium-sulfur battery, since sulfur used as a positive electrode active material is a nonconductor having no electrical conductivity with electrical conductivity of 5×10⁻³⁰ S/cm, there is a problem in that electrons generated by an electrochemical reaction are difficult to migrate. Accordingly, sulfur is composited with a carbon material capable of providing an electrochemical reaction site, and used as a sulfur-carbon composite.

However, in addition to an elution problem of lithium polysulfide (Li₂Sₓ, x=8, 6, 4, 2) produced during a charge and discharge process of a lithium-sulfur battery, there is a problem in that electrochemical reactivity of a sulfur-carbon composite, which is a positive electrode active material, decreases due to low electrical conductivity of sulfur that is a positive electrode active material and lithium sulfide (Li₂S) that is a discharged product thereof.

Accordingly, although having high initial discharge capacity during the actual operation, since a lithium-sulfur battery has capacity and charge and discharge efficiency properties rapidly declining as a cycle progresses, and energy density and cycle life characteristics are reduced as well, it is difficult to secure sufficient performance and driving stability, and thus commercialization has not been successful.

In order to implement a lithium-sulfur battery having energy density and cycle life characteristics at a commercially feasible level, various techniques to improve electrochemical reactivity of a sulfur-carbon composite, which is a positive electrode, specifically a positive electrode active material, have been proposed.

As one example, Korean Patent Publication No. 2016-0046775 discloses that, by providing a positive electrode coating layer formed with an amphiphilic polymer on a portion of a surface of a positive electrode active site including a sulfur-carbon composite, lithium polysulfide elution is suppressed, cycle properties of a lithium-sulfur battery can be improved.

The problem of lithium polysulfide elution has been improved to some extent through the coating layer provided in the patent, however, the effect is not sufficient in the aspect of maintaining electrochemical reactivity of a positive electrode. In addition, there is a problem of being unsuitable for commercialization because the manufacturing process is complicated and the materials used are expensive. Accordingly, there is still a need to develop a lithium-sulfur battery capable of implementing an excellent performance and an operation stability by enhancing electrochemical reactivity of a positive electrode through a simple process.

### [Prior Art Documents]

### [Patent Documents]

Korean Patent Publication No. 2016-0046775 (2016.04.29), Cathode for lithium-sulfur battery and method of preparing the same.

WO 2021/137635 A1 discloses a positive electrode for a lithium secondary battery and a lithium secondary battery comprising same and, more specifically, to a positive electrode for a lithium secondary battery, comprising: a sulfur-carbon composite comprising a thermally expanded reduced graphene oxide, as a positive electrode active material; and montmorillonite as an additive.

### [Disclosure]

### [Technical Problem]

As a result of conducting various studies to solve the above problems, and the inventors of the present disclosure have confirmed that when introducing an island-shaped carbon coating layer to a surface of a sulfur-carbon composite, an electrochemical reaction site increased and thus an improved electrochemical reactivity was exhibited, and have completed the present disclosure.

Accordingly, it is an object of the present disclosure to provide a positive electrode for a lithium-sulfur battery having excellent electrochemical reactivity.

In addition, it is another object of the present disclosure to provide a lithium-sulfur battery including the positive electrode.

### [Technical Solution]

The above objective is achieved in accordance with the subject-matter of the independent claims. Further embodiments result from the subclaims and the following detailed description.

In order to achieve the above objects, the present disclosure provides a positive electrode for a lithium-sulfur battery, including a positive electrode current collector and a positive electrode active material layer positioned on at least one surface of the positive electrode current collector, wherein the positive electrode active material layer comprises a sulfur-carbon composite having a plurality of island-shaped carbon coating layers on its surface as a positive electrode active material; each of the plurality of island-shaped carbon coating layers comprises reduced graphene oxide; and the island shape means a form in which the carbon coating layer is discontinuously separated and distributed like an island on the surface of the sulfur-carbon composite surface.

In addition, the present disclosure provides a lithium-sulfur battery comprising the positive electrode for the lithium-sulfur battery.

### [Advantageous Effects]

The positive electrode for a lithium-sulfur battery of the present disclosure comprises a sulfur-carbon composite including a plurality of carbon coating layers distributed in a discontinuous island shape on its surface as a positive electrode active material, thereby increasing an electrochemical reaction site and thus exhibiting an excellent electrochemical reactivity of the positive electrode. Accordingly, it is possible to maximize the expression of the capacity of the positive electrode, and thus a lithium-sulfur battery having high capacity and high energy density can be implemented.

### [Brief Description of Drawings]

FIG. 1 is a diagram schematically illustrating a configuration of a positive electrode active material layer according to an embodiment of the present disclosure.
FIG. 2 is a scanning electron microscope image of the positive electrode according to Example 3.
FIG. 3 is a scanning electron microscope image of a positive electrode according to Example 6.
FIG. 4 is a scanning electron microscope image of a positive electrode according to Comparative Example 2.
FIG. 5 and FIG. 6 are graphs showing the results of evaluation of capacity characteristics of a lithium-sulfur battery according to Experimental Example 3.
FIG. 7 and FIG. 8 are graphs showing the results of evaluation of cycle life characteristics of the lithium-sulfur battery according to Experimental Example 3.

### [Detailed Description]

Hereinafter, the present disclosure will be described in more detail.

The terms and words used in the present specification and claims should not be construed as limited to ordinary or dictionary meaning, and should be construed in a sense and concept consistent with the technical idea of the present disclosure, based on the principle that the inventor can properly define the concept of a term to describe his invention in the best way possible.

The terminology used herein is for the purpose of describing particular embodiments only and is not intended to be limiting of the present disclosure. The singular forms include plural referents unless the context clearly dictates otherwise. It is to be understood that the terms "comprise" or "have" as used in the present specification, are intended to designate the presence of features stated in the specification, numbers, steps, operations, components, parts or combinations thereof, but not to preclude the possibility of the presence or addition of one or more other features, numbers, steps, operations, components, parts, or combinations thereof.

A term "composite" as used herein refers to a material that two or more materials are combined to express more effective functions while forming physically and chemically different phases from each other.

A term "polysulfide" used in the present specification is a concept including both "polysulfide ion (Sₓ²⁻, x=8, 6, 4, 2))" and "lithium polysulfide (Li₂Sₓ or LiSₓ⁻ x=8, 6, 4, 2)".

A term "mean volume diameter (MV)" used in the present specification is an arithmetic particle size measured by volume, and "average particle diameter (D₁₀)" may be defined as a particle diameter based on 10% in the volume cumulative particle diameter distribution and "average particle diameter (D₅₀)" may be defined as a particle diameter based on 50% in the volume cumulative particle diameter distribution, which may be measured using a laser diffraction method.

A lithium-sulfur battery is in the spotlight as a next-generation secondary battery because, as well as having high discharge capacity and theoretical energy density, sulfur used as a positive electrode active material has advantages of being abundant in resources and inexpensive lowering battery manufacturing costs, and being environmental-friendly.

Sulfur, which is a positive electrode active material in a lithium-sulfur battery, is a nonconductor, and is used in the form of a sulfur-carbon composite obtained by compositing with a carbon material that is a conductive material in order to supplement electrical conductivity.

However, in a lithium-sulfur battery, the loss of sulfur participating in an electrochemical reaction occurs due to elution of lithium polysulfide produced during charge and discharge, and as an electrical conductivity of lithium sulfide, which is a reduced material of sulfur, is very low, the electrochemical reactivity of the sulfur-carbon composite, which is a positive electrode active material, is lowered, and as a result, there is a problem in that both theoretical discharge capacity and theoretical energy density are not fully implemented in the actual operation, and also the deterioration of performance and operation stability of the battery is accelerated. In addition, since sulfur changes into lithium sulfide, and causes volume expansion of about 80%, which reduces a pore volume inside the positive electrode and thus makes it difficult to contact an electrolyte, there is a problem in that the electrochemical reactivity of the positive electrode active material is further reduced.

To this end, methods such as increasing a loading amount of sulfur, using a carbon material with a high specific surface area as a sulfur carrier, or introducing a coating layer for suppressing elution of lithium polysulfide have been proposed in the prior art, but the performance of a lithium-sulfur battery has not been effectively improved, and also there has been a disadvantage of causing a serious problem in battery stability or being inefficient in terms of process.

Accordingly, the present disclosure provides a positive electrode for a lithium-sulfur battery capable of implementing a lithium-sulfur battery with enhanced capacity, output and cycle life characteristics by forming an island-shaped discontinuous carbon coating layer with a carbon material having a high specific surface area on the surface of a sulfur-carbon composite, increasing a reaction site in which an electrochemical oxidation and reduction reaction can occur, and thus improving the electrochemical reactivity of the positive electrode.

Specifically, the positive electrode for a lithium-sulfur battery according to the present disclosure includes a positive electrode current collector and a positive electrode active material layer positioned on at least one surface of the positive electrode current collector, and the positive electrode active material layer comprises a sulfur-carbon composite having a plurality of island-shaped carbon coating layers on its surface as a positive electrode active material. In this case, the island shape means a form in which the carbon coating layer is discontinuously separated and distributed like an island on the surface of the sulfur-carbon composite surface, and each of the island-shaped carbon coating layers separately present is not particularly limited in the shape, and may have various shapes such as spherical, cylindrical, polygonal, hemispherical, elliptical and irregular shapes.

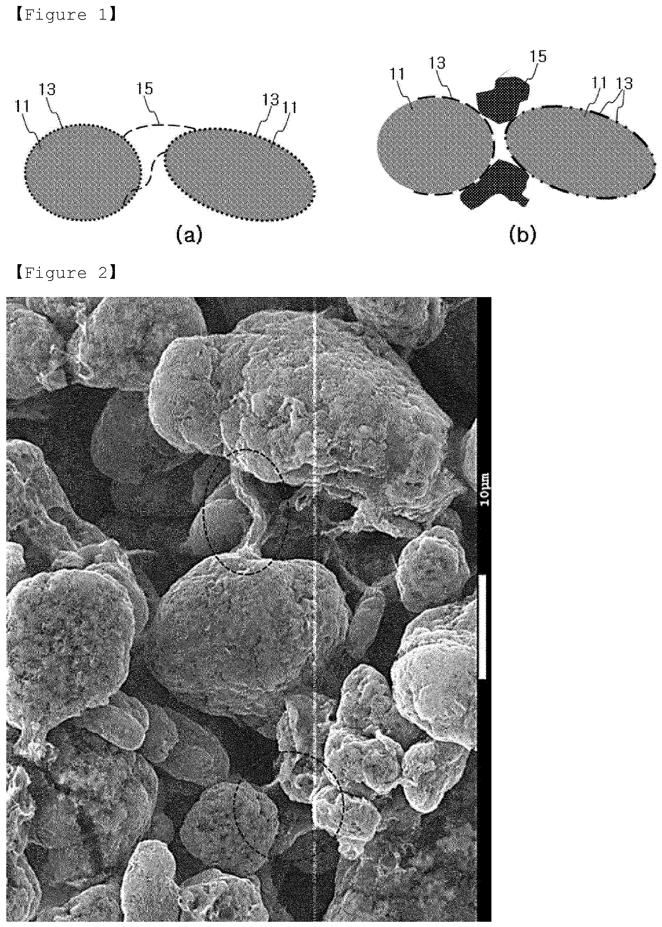

FIG. 1 schematically illustrates a configuration of the positive electrode active material layer according to one embodiment of the present disclosure. As illustrated in FIG. 1, the positive electrode active material included in the positive electrode active material layer of the present disclosure has a form in which a discontinuous island-shaped carbon coating layer 13 is distributed on the surface of a sulfur-carbon composite 11. The present disclosure includes a sulfur-carbon composite having a carbon coating layer in an island shape discontinuously distributed on the surface, by mixing a carbon material with a high specific surface area in a powder state with a sulfur-carbon composite while being dispersed in a dispersion medium without using a separate dispersant, as a positive electrode active material in the positive electrode, specifically the positive electrode active material layer. Accordingly, the positive electrode according to the present disclosure has the positive electrode active material with a high specific surface area, which is included in the positive electrode active material layer, to increase a reaction site in which an electrochemical oxidation and reduction reaction can occur, and thus improves the electrochemical reactivity of the positive electrode, thereby implementing a lithium-sulfur battery with enhanced capacity, output and cycle life characteristics.

In the present disclosure, the positive electrode may include a positive electrode current collector and a positive electrode active material layer formed on one surface or both surfaces of the positive electrode current collector.

The positive electrode current collector supports the positive electrode active material layer, and is not particularly limited as long as it has high conductivity without causing a chemical change in the relevant battery. For example, copper, stainless steel, aluminum, nickel, titanium, palladium, sintered carbon, copper or stainless steel surface-treated with carbon, nickel, silver or the like, aluminum-cadmium alloy or the like may be used as the positive electrode current collector.

The positive electrode current collector may strengthen binding strength with the positive electrode active material by forming fine irregularities on a surface thereof, and may be used in various forms such as film, sheet, foil, mesh, net, porous body, foam, non-woven fabric and the like.

The positive electrode active material layer comprises a sulfur-carbon composite having a plurality of island-shaped carbon coating layers on its surface as the positive electrode active material.

The sulfur-carbon composite comprises a porous carbon material and sulfur on at least a portion of inner and outer surfaces of the porous carbon material. Since the sulfur does not have electrical conductivity alone, it is composited with a conductive material to use it, and accordingly, has a sulfur-carbon composite form.

The sulfur may include at least one selected from the group consisting of elemental sulfur (S₈) and sulfur compounds. The positive electrode active material may include at least one selected from the group consisting of inorganic sulfur, Li₂Sₙ (n≥1), disulfide compounds, organic sulfur compound and carbon-sulfur polymer ((C₂Sₓ)ₙ, x=2.5 to 50, n≥2). Preferably, the sulfur may be inorganic sulfur.

The sulfur may be comprised in an amount of 60 to 90% by weight, and preferably in an amount of 65 to 80% by weight, based on the total 100% by weight of the positive electrode active material layer. The positive electrode active material layer having a sulfur content of less than 60% by weight has a limit in increasing energy density of a battery.

The porous carbon material not only provides a skeleton capable of uniformly and stably fixing the sulfur described above, but also supplements low electrical conductivity of sulfur to proceed an electrochemical reaction smoothly.

As the porous carbon material, any material commonly used in the art may be used as long as it is a carbon-based material having conductivity, and having a porous structure or a high specific surface area. For example, the porous carbon material may be at least one selected from the group consisting of graphite; graphene; carbon black such as denka black, acetylene black, ketjen black, channel black, furnace black, lamp black or thermal black; carbon nanotubes (CNT) such as single-walled carbon nanotubes (SWCNT) or multi-walled carbon nanotubes (MWCNT); carbon fibers such as graphite nanofibers (GNF), carbon nanofibers (CNF) or activated carbon fibers (ACF); graphite such as natural graphite, artificial graphite or expanded graphite, and activated carbon.

The porous carbon material may be prepared by carbonizing precursors made of various carbon materials, and may include a plurality of non-uniform pores on the surface and the inside. The pores have an average diameter in a range of 1 to 200 nm, and the porosity may be in a 10 to 90% range of a total volume of the porous carbon material. When the average diameter of the pores is less than the above range, the pore size is merely a molecular level making sulfur impregnation impossible, and on the contrary to this, when the average diameter exceeds the above range, the porous carbon material has weakened mechanical strength, which is not preferred to be used in a process for preparing a positive electrode.

The porous carbon material may have an average diameter of 100 nm to 50 µm, and preferably 10 to 50 µm. When the average diameter of the porous carbon material is less than the above range, it may have a problem when loading sulfur into the pores of the porous carbon material, and on the contrary to this, when the average diameter exceeds the above range, the sulfur-carbon composite may have reduced conductivity.

The shape of the porous carbon material may be a globular type, a rod type, a needle type, a plate type, a tube type or a bulk type, and may be used without limitation as long as it is commonly used in a lithium-sulfur battery.

In the sulfur-carbon composite of the present disclosure, the sulfur is located on at least any one of inside and surface of the porous carbon material described above, and in this case, may be present in an area of less than 100%, preferably 1 to 95%, and more preferably 60 to 90% of the entire inner and outer surfaces of the porous carbon material. When the sulfur is present on the inner and outer surfaces of the porous carbon material in the above range, maximum effects may be obtained in terms of electron transfer area and wettability with an electrolyte. Specifically, since the sulfur is thinly and evenly impregnated on the inner and outer surfaces of the porous carbon material in the area of the above range, it may increase an electron transfer contact area in a charge and discharge process. When the sulfur is located in a 100% area of the entire inner and outer surfaces of the porous carbon material, the porous carbon material is completely covered with sulfur reducing wettability for an electrolyte, and thus electrons are not transferred and participation in an electrochemical reaction becomes impossible.

The sulfur-carbon composite may comprise the sulfur in an amount of 65 to 90% by weight, preferably in 70 to 85% by weight, and more preferably in 72 to 80% by weight, based on the total 100% by weight of the sulfur-carbon composite. When the sulfur content is less than the above range, the content of the porous carbon material in the sulfur-carbon composite relatively increases, which increases a binder content used when preparing the positive electrode. Such an increase in the binder amount used eventually increases sheet resistance of the positive electrode, which leads to a role of an insulator preventing electron migration (electron pass), and battery performance may decline. On the contrary to this, when the sulfur content exceeds the above range, as the sulfurs, which are not bound to the porous carbon material, aggregate with each other or are re-eluted to the surface of the porous carbon material, it is difficult to receive electrons and thus cannot participation in an electrochemical reaction, which may result in a loss in the capacity of the battery.

Accordingly, in the sulfur-carbon composite of the present disclosure, a weight ratio of the porous carbon material and the sulfur (% by weight of porous carbon material: % by weight of sulfur) may be 35: 65 to 10: 90, and preferably 30: 70 to 15: 85.

The sulfur-carbon composite may be obtained by compositing the sulfur and the porous carbon material through simple mixing, or may have a coating form of a core-shell structure or a loaded form. The coating form of a core-shell structure is any one of the sulfur or the porous carbon material coating the other material, and, for example, the porous carbon material surface may be wrapped with the sulfur, or vice versa. In addition, the loaded form may be a form in which the sulfur is loaded inside the porous carbon material. As the sulfur-carbon composite, any form may be used as long as the content ratio of the sulfur and the porous carbon material is satisfied, and the form is not limited in the present disclosure.

A method for preparing the sulfur-carbon composite is not particularly limited in the present disclosure, and methods commonly used in the art may be used. For example, a method of simply mixing the porous carbon material and the sulfur, and then compositing the result by heat treating may be used.

The sulfur-carbon composite may be comprised in an amount of 70 to 100% by weight, and preferably 85 to 98% by weight, based on the total weight of the positive electrode active material layer. When the sulfur-carbon composite content is less than the above range, a relative content of an additional component such as a binder relatively increases making it difficult to implement a battery with high capacity and high energy density, and on the contrary to this, when the content exceeds the above range, a content of a binder relatively decreases causing a problem of reducing physical properties of the positive electrode.

The carbon coating layer is distributed in an island shape on the surface of the sulfur-carbon composite, and includes reduced graphene oxide (rGO).

The reduced graphene oxide may have a specific surface area of 700 m²/g or more, preferably 700 to 1500 m²/g, and more preferably 800 to 1000 m²/g.

The reduced graphene oxide may be comprised in an amount of 0.5 to 3% by weight, and preferably 0.7 to 1.5% by weight, based on the total weight of the positive electrode active material. When the reduced graphene oxide content is less than the above range, the carbon coating layer amount is too small to obtain target effects. On the contrary to this, when the reduced graphene oxide content exceeds the above range, the carbon coating layer is formed in an excessively wide range causing a problem of severely increasing initial resistance.

The size of the island shape that the carbon coating layer has may have an average longitudinal length of, for example, 10 to 100 µm, preferably 20 to 80 µm, and more preferably 30 to 70 µm, but the size is not limited thereto. In this case, a method for measuring the longitudinal length in the island-shaped carbon coating layer is not particularly limited, and methods known in the art of lithium secondary battery may be used. When the island shape size is too big, the sulfur-carbon composite surface may be excessively blocked rapidly increasing initial resistance, and when the island shape size is too small, the effect of forming the carbon coating layer on the sulfur-carbon composite may be insufficient. When the island shape size of the carbon coating layer satisfies the above range, the effect of improving electrochemical reactivity obtained from forming the carbon coating layer may be secured without declining operation or performance of the battery.

As described above, the positive electrode active material of the present disclosure including a plurality of island-shaped carbon coating layers on the surface of the sulfur-carbon composite exhibits enhanced specific surface area and pore volume, and includes small pores compared to a sulfur-carbon composite not including a carbon coating layer (hereinafter, referred to as a pure sulfur-carbon composite).

Specifically, the positive electrode active material may have a specific surface area of 20 to 50 m²/g, and preferably 30 to 40 m²/g. In addition, the positive electrode active material may have a pore volume of 0.3 to 0.5 cm³/g, and preferably 0.35 to 0.45 cm³/g. In addition thereto, the positive electrode active material may include pores in a size range of 30 to 70 nm.

In addition, as the positive electrode active material includes the carbon coating layer, it tends to have reduced volume average particle diameter and average particle diameter compared to a pure sulfur-carbon composite.

Specifically, the positive electrode active material may have a volume average particle diameter of 30 to 70 µm, and preferably 40 to 65 µm. In addition, the positive electrode active material may have an average particle diameter (D₁₀) of 5 to 30 µm and preferably 10 to 20 µm, and an average particle diameter (D₅₀) of 30 to 60 µm and preferably 40 to 55 µm.

Meanwhile, when including a continuous carbon coating layer on the entire surface of the sulfur-carbon composite, since a plane (basal plane) with almost no pores of the reduced graphene oxide included in the carbon coating layer covers the surface, a finally prepared positive electrode active material (sulfur-carbon composite having the entire surface coated with carbon coating layer) has a lower specific surface area compared to a pure sulfur-carbon composite.

Accordingly, in the positive electrode active material of the present disclosure including plurality of island-shaped carbon coating layers discontinuously formed on the surface of the sulfur-carbon composite, the ratio of the specific surface area of the positive electrode active material according to the present disclosure with respect to the specific surface area of a pure sulfur-carbon composite (specific surface area of positive electrode active material according to the present disclosure/specific surface area of pure sulfur-carbon composite) may be 1 or more, preferably 1 to 3, and more preferably 1.5 to 2.7.

As the positive electrode active material according to the present disclosure includes discontinuous carbon coating layers formed in an island shape on the sulfur-carbon composite surface, the average particle diameter decreases, and the specific surface area and the pore volume increase, which increases a site where the electrochemical reaction proceeds resulting in excellent electrochemical reactivity, and accordingly, effects of improving capacity, output and cycle life characteristics of the lithium-sulfur battery may be secured.

Referring to FIG. 1, the positive electrode active material layer of the present disclosure may further comprise a carbon bridge 15 in addition to the positive electrode active material described above.

The carbon bridge is an aggregate of reduced graphene oxide failing to form the carbon coating layer on the sulfur-carbon composite surface, and serves a role of a bridge connecting the positive electrode active materials. In addition, as the positive electrode active material layer of the present disclosure includes the carbon bridge, the it does not include a separate conductive material.

The carbon bridge may have any shape as long as it is capable of being present between pores in the positive electrode active material layer of the present disclosure, specifically between the positive electrode active materials. As an example, the carbon bridge may be a crumpled structure or may have at least one selected among amorphous, plate-like, flake, spherical or fibrous shapes.

The positive electrode active material layer of the present disclosure may further comprise, in addition to the positive electrode active material, one or more additives selected among transition metal element, group IIIA element, group IVA element, sulfur compound of these elements, and alloy of these elements and sulfur.

The transition metal element may be Sc, Ti, V, Cr, Mn, Fe, Co, Ni, Cu, Zn, Y, Zr, Nb, Mo, Tc, Ru, Rh, Pd, Os, Ir, Pt, Au, Hg or the like. The group IIIA element may be Al, Ga, In, Tl or the like, and the group IVA element may be Ge, Sn, Pb or the like.

The positive electrode active material layer may further comprise, together with the positive electrode active material and the carbon bridge described above, or optionally the additives described above, a binder for well adhering the positive electrode active material to the current collector.

The binder maintains the positive electrode active material on the positive electrode current collector, and organically connects the positive electrode active materials to further increase binding force therebetween, and any binder known in the art may be used.

For example, the binder may be one selected from the group consisting of fluorine resin-based binders including polyvinylidene fluoride (PVdF) or polytetrafluoroethylene (PTFE); rubber-based binders including styrene butadiene rubber (SBR), acrylonitrile-butadiene rubber or styreneisoprene rubber; cellulose-based binders including carboxyl methyl cellulose (CMC), starch, hydroxypropyl cellulose or regenerated cellulose; polyalcohol-based binders; polyolefin-based binders including polyethylene or polypropylene; polyimide-based binders; polyester-based binders; and silane-based binders, or mixtures or copolymers of two or more types thereof.

The binder may be comprised in an amount of 0.5 to 30% by weight based on the total weight of the positive electrode active material layer. When the binder content is less than the above range, physical properties of the positive electrode decline resulting in detachment of the positive electrode active material in the positive electrode, and when the content exceeds the above range, since the ratio of the positive electrode active material may relatively decrease in the positive electrode, which may reduce battery capacity, it is prefer to determine a proper content in the above range.

A method for preparing the positive electrode for a lithium-sulfur battery is not particularly limited in the present disclosure, and common methods or various methods modifying the same may be used by those skilled in the art.

As an example, the positive electrode for a lithium-sulfur battery may be prepared by preparing a positive electrode slurry composition including the composition described above, and then coating the same on at least one surface of the positive electrode current collector to form a positive electrode active material layer.

The positive electrode slurry composition may comprise the positive electrode active material, the binder, the additives and the like described above, and may further include a solvent in addition thereto.

According to one embodiment of the present disclosure, the positive electrode slurry composition may be prepared through steps of preparing a reduced graphene oxide dispersion by dispersing reduced graphene oxide into a dispersion medium; preparing a sulfur-carbon composite having a plurality of island-shaped carbon coating layers on its surface by mixing the reduced graphene oxide dispersion and a sulfur-carbon composite and drying the result; and mixing the sulfur-carbon composite having carbon coating layers with a binder, additives and a solvent.

According to another embodiment of the present disclosure, the positive electrode slurry composition may be prepared by preparing a pre-dispersion including reduced graphene oxide, and then adding (externally adding) the pre-dispersion to a mixture including a sulfur-carbon composite, a binder, a solvent and the like. When preparing the pre-dispersion, the reduced graphene oxide may be dispersed into a binder.

As the dispersion medium used for preparing the reduced graphene oxide dispersion, lower alcohols such as ethanol may be used.

As the solvent, those capable of uniformly dispersing the positive electrode active material, the binder and the additives are used. As such a solvent, water is most preferred as an aqueous solvent, and in this case, the water may be distilled water or deionized water. However, the solvent is not limited thereto, and lower alcohols readily mixable with water may be used as necessary. The lower alcohol may be methanol, ethanol, propanol, isopropanol, butanol and the like, and preferably, these may be mixed with water to be used.

The solvent may be included at a level having a concentration capable of facilitating the application of the positive electrode slurry composition, and the specific content varies depending on the application method and apparatus.

The positive electrode slurry composition may further include materials commonly used in the art for the purpose of improving the function and the like as necessary. For example, the positive electrode slurry composition may include a viscosity modifier, a fluidizing agent, a filler and the like.

The method of applying the positive electrode slurry composition is not particularly limited in the present disclosure, and may be, for example, methods such as doctor blade, die casting, comma coating and screen printing. In addition, the positive electrode slurry may also be applied on the positive electrode current collector using a method of pressing or lamination after forming on a separate substrate.

After the above application, a drying process for removing the solvent may be performed. The drying process is performed at temperature and time capable of sufficiently removing the solvent, and the condition is not particularly limited in the present disclosure because it may vary depending on the type of solvent. As an example, a method of drying by warm air, hot air or low-humidity air, vacuum, irradiation of (far)infrared rays, electron beam and the like, may be included. The drying rate is generally adjusted to remove the solvent as quickly as possible within a rate range to the extent that the positive electrode active material layer is not cracked due to stress concentration or the positive electrode active material layer is not peeled off from the positive electrode current collector.

In addition, the present disclosure provides a lithium-sulfur battery comprising the positive electrode for a lithium-sulfur battery.

The lithium-sulfur battery comprises a positive electrode; a negative electrode; and an electrolyte interposed therebetween, and as the positive electrode, includes the positive electrode for a lithium-sulfur battery according to the present disclosure.

The positive electrode is based on the present disclosure, and follows the descriptions described above.

The negative electrode may comprise a negative electrode current collector and a negative electrode active material layer applied on one surface of both surfaces of the negative electrode current collector. Alternatively, the negative electrode may be a lithium metal plate.

The negative electrode current collector is for supporting the negative electrode active material layer, and is as described in the positive electrode current collector.

The negative electrode active material layer may comprise a negative electrode active material, and optionally may further include a conductive material, a binder and the like, and the conductive material and the binder follow the above descriptions.

The negative electrode active material may be materials capable of reversibly intercalating or deintercalating lithium ions (Li⁺), materials capable of reversibly forming a lithium-containing compound by reacting with lithium ions, lithium metal, or lithium alloys.

The material capable of reversibly intercalating or deintercalating lithium ions (Li⁺) may be, for example, crystalline carbon, amorphous carbon, or a mixture thereof. The material capable of reversibly forming a lithium-containing compound by reacting with lithium ions (Li⁺) may be, for example, tin oxide, titanium nitrate, or silicon. The lithium alloy may be, for example, alloys of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically may have a form of lithium metal thin film or lithium metal powder.

A method for preparing the negative electrode is not particularly limited, and methods of forming a layer or film commonly used in the art may be used. For example, methods such as pressing, coating, and deposition may be used. In addition, a case of assembling a battery without a lithium thin film on a current collector and then forming a metal lithium thin film on the metal plate by initial charge is also included in the negative electrode of the present disclosure.

The electrolyte is positioned between the positive electrode and the negative electrode described above to produce an electrochemical oxidation or reduction reaction in the positive electrode and the negative electrode therethrough, and comprises a lithium salt and a non-aqueous organic solvent.

The lithium salt may be used without limitation as long as it is commonly used in a lithium secondary battery.

Specific examples of the lithium salt may be at least one selected from the group consisting of LiCl, LiBr, LiI, LiClO₄, LiBF₄, LiB₁₀Cl₁₀, LiPF₆, LiCF₃SO₃, LiCF₃CO₂, LiC₄BO₈, LiAsF₆, LiSbF₆, LiAlCl₄, LiSO₃CH₃, LiSO₃CF₃, LiSCN, LiC(CF₃SO₂)₃, LiN(CF₃SO₂)₂ (lithium bis (trifluoromethanesulfonyl) imide; LiTFSI), LiN (C₂F₅SO₂)₂, LiN (SO₂F)₂ (lithium bis(fluorosulfonyl)imide; LiFSI), chloroborane lithium, lower aliphatic carboxylic acid lithium, lithium tetraphenylborate, and lithium imide.

The concentration of the lithium salt may be 0.2 to 4 M, specifically from 0.6 to 2 M, and more specifically 0.7 to 1.7 M depending on various factors such as a composition of the electrolyte, solubility of the lithium salt, conductivity of the dissolved lithium salt, charge and discharge conditions of the battery, a working temperature, and other factors known in the lithium secondary battery field. When the lithium salt concentration is used in less than 0.2 M, conductivity of the electrolyte may decrease causing decline in the electrolyte performance, and when the lithium salt concentration is used in excess of 4 M, viscosity of the electrolyte may increase leading to a decrease in the lithium ion mobility.

As the non-aqueous organic solvent, those commonly used in an electrolyte for a lithium secondary battery may be used without limitation. For example, the organic solvent may be ethers, esters, amides, linear carbonates, cyclic carbonates and the like alone or a mixture of two or more types. Among them, ether-based compounds may be typically included.

As an example, the ether-based compound may be at least one selected from the group consisting of dimethyl ether, diethyl ether, dipropyl ether, methyl ethyl ether, methyl propyl ether, ethyl propyl ether, dimethoxyethane, diethoxyethane, methoxyethoxyethane, diethylene glycol dimethyl ether, diethylene glycol diethyl ether, diethylene glycol methyl ethyl ether, triethylene glycol dimethyl ether, triethylene glycol diethyl ether, triethylene glycol methyl ethyl ether, tetraethylene glycol dimethyl ether, tetraethylene glycol diethyl ether, tetraethylene glycol methyl ethyl ether, polyethylene glycol dimethyl ether, polyethylene glycol diethyl ether, polyethylene glycol methyl ethyl ether, 1,3-dioxolane, tetrahydrofuran, and 2-methyltetrahydrofuran, but is not limited thereto.

The ester among organic solvents described above may be any one selected from the group consisting of methyl acetate, ethyl acetate, propyl acetate, methyl propionate, ethyl propionate, propyl propionate, γ-butyrolactone, γ-valerolactone, γ-caprolactone, σ-valerolactone, and ε-caprolactone, or a mixture of two or more types thereof, but is not limited thereto.

The linear carbonate compound may be, specifically any one selected from the group consisting of dimethyl carbonate (DMC), diethyl carbonate (DEC), dipropyl carbonate, ethyl methyl carbonate (EMC), methyl propyl carbonate, and ethyl propyl carbonate, or a mixture of two or more types thereof, but the linear carbonate compound is not limited thereto.

In addition, the cyclic carbonate compound may be, specifically any one selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinyl ethylene carbonate, and halides thereof, or a mixture of two or more types thereof. The halide thereof may be, for example, fluoroethylene carbonate (FEC) and the like, but is not limited thereto.

In addition to the above-described organic solvents, at least one selected from the group consisting of N-methylpyrrolidone, dimethyl sulfoxide, sulfolane, furan, 2-methylfuran, 3-methylfuran, 2-ethylfuran, 2-propylfuran, 2-butylfuran, 2,3-dimethylfuran, 2,4-dimethylfuran, 2,5-dimethylfuran, pyran, 2-methylpyran, 3-methylpyran, 4-methylpyran, benzofuran, 2-(2-nitrovinyl)furan, thiophene, 2-methylthiophene, 2-ethylthiophene, 2-propylthiophene, 2-butylthiophene, 2,3-dimethylthiophene, 2,4-dimethylthiophene, and 2,5-dimethylthiophene may be included.

In addition to the above-described compositions, the electrolyte may further include a nitric acid-based compound commonly used in the art. As an example, lithium nitrate (LiNO₃), potassium nitrate (KNO₃), cesium nitrate (CsNO₃), magnesium nitrate (Mg(NO₃)₂), barium nitrate (Ba(NO₃)₂), lithium nitrite (LiNO₂), potassium nitrite (KNO₂), cesium nitrite (CsNO₂) and the like may be included.

The electrolyte may be injected at a proper stage in a battery manufacturing process depending on a manufacturing process and required physical properties of a final product. In other words, the electrolyte may be injected at a stage prior to assembling a battery or at a final stage of battery assembly.

A separator may be further included between the positive electrode and the negative electrode.

The separator separates or insulates the positive electrode and the negative electrode from each other and enables lithium ion transfer between the positive electrode and the negative electrode, and may be formed with porous nonconductive or insulating materials, and used without particular limitation as long as it is commonly used as a separator in a lithium secondary battery. Such a separator may be an independent member such as a film, or may be a coating layer added to a positive electrode and/or a negative electrode.

The separator is preferable to have an excellent moisture-containing ability for an electrolyte while having low resistance for ion migration of the electrolyte.

The separator may be formed with a porous substrate, and any porous substrate may be used as long as the porous substrate is commonly used in a secondary battery, and may be used as a porous polymer film alone or a laminate thereof. For example, non-woven fabrics made of high melting point glass fiber, polyethylene terephthalate and the like, or polyolefin-based porous films may be used, but is not limited thereto.

Materials of the porous substrate may be used without particular limitation in the present disclosure as long as the porous substrates are commonly used in an electrochemical device. For example, the porous substrate may be at least one selected from the group consisting of polyolefins such as polyethylene and polypropylene, polyesters such as polyethylene terephthalate and polybutylene terephthalate, polyamide, polyacetal, polycarbonate, polyimide, polyetheretherketone, polyethersulfone, polyphenylene oxide, polyphenylene sulfide, polyethylene naphthalate, polytetrafluoroethylene, polyvinylidene fluoride, polyvinyl chloride, polyacrylonitrile, cellulose, nylon, poly(p-phenylene benzobisoxazole), and polyarylate.

A thickness of the porous substrate is not particularly limited, but may be 1 to 100 µm and preferably 5 to 50 µm. The porous substrate thickness range is not limited to the above range, but when the thickness is excessively thinner than the lower limit described above, mechanical properties decline, and the separator may be readily damaged during battery use.

Average diameter and porosity of the pores present in the porous substrate are not particularly limited as well, but may be 0.001 to 50 µm and 10% to 95%, respectively.

The lithium-sulfur battery of the present disclosure may be classified into a cylindrical-type, a prismatic-type, a coin-type, a pouch-type and the like depending on the shape, and may be divided into a bulk-type and a thin film-type depending on the size. Since structures and manufacturing methods of these batteries are widely known in the art, detailed descriptions thereon will be omitted.

In addition, the present disclosure provides a battery module including the lithium-sulfur battery as a unit cell.

The battery module may be used as a power supply of medium to large-sized devices requiring high-temperature stability, long cycle properties, and high capacity properties.

The medium to large-sized devices may be power tools operated through receiving electric power by a battery powered motor; electric vehicles including electric vehicles (EV), hybrid electric vehicles (HEV), plug-in hybrid electric vehicles (PHEV) and the like; electric two-wheeled vehicles including electric bikes (E-bike) and electric scooters (E-scooter); electric golf carts; electric storage systems, and the like, but are not limited thereto.

### [Mode for Invention]

Hereinafter, in order to facilitate understanding of the present disclosure, preferred examples are presented, but the following examples are intended to illustrate the present disclosure only. The invention is defined by the appended claims.

### Example and Comparative Example

### [Example 1]

Reduced graphene oxide having a specific surface area of 1000 m²/g and a binder (styrene-butadiene rubber (SBR)/carboxyl methyl cellulose (CMC), SBR:CMC=7:3 (weight ratio)) were mixed in a weight ratio of 1:1 to prepare a pre-dispersion, and then a positive electrode slurry composition, in which a sulfur-carbon composite (sulfur:porous carbon material=75:25 (weight ratio)), a binder, and the reduced graphene oxide were mixed in a weight ratio (% by weight) of 94:5:1, was prepared.

The positive electrode slurry composition prepared as above was applied to a thickness of 250 µm on aluminum foil having a thickness of 20 µm, and then dried at 50°C for 12 hours to prepare a positive electrode.

The prepared positive electrode and a lithium metal negative electrode having a thickness of 40 µm were placed to face each other, and then after interposing a separator therebetween, an electrolyte (70 *µ*ℓ) was injected thereto to manufacture a lithium-sulfur battery.

In this case, polyethylene having a thickness of 16 µm and porosity of 46% was used as the separator, and as the electrolyte, a mixture solution obtained by dissolving LiFSI having a concentration of 0.75 M and 3% by weight of lithium nitrate in an organic solvent formed by mixing 2-methylfuran and dimethoxyethane in a volume ratio of 33:77 was used.

### [Example 2]

A lithium-sulfur battery was manufactured in the same manner as in Example 1, except that after preparing the pre-dispersion by mixing reduced graphene oxide having a specific surface area of 1000 m²/g and a binder (styrene-butadiene rubber (SBR)/carboxyl methyl cellulose (CMC), SBR:CMC=7:3 (weight ratio)) in a weight ratio of 1:1, a positive electrode slurry composition in which a sulfur-carbon composite (sulfur:porous carbon material=75:25 (weight ratio)), a binder, and the reduced graphene oxide were mixed in a weight ratio (% by weight) of 93.5:5:1.5 was prepared.

### [Example 3]

A lithium-sulfur battery was manufactured in the same manner as in Example 1, except that after preparing the pre-dispersion by mixing reduced graphene oxide having a specific surface area of 1000 m²/g and a binder (styrene-butadiene rubber (SBR)/carboxyl methyl cellulose (CMC), SBR:CMC=7:3 (weight ratio)) in a weight ratio of 1:1, a positive electrode slurry composition in which a sulfur-carbon composite (sulfur:porous carbon material=75:25 (weight ratio)), a binder and the reduced graphene oxide were mixed in a weight ratio (% by weight) of 92:5:3 was prepared.

### [Example 4]

Reduced graphene oxide having a specific surface area of 1000 m²/g was dispersed into ethanol to prepare a reduced graphene oxide dispersion (reduced graphene oxide:ethanol=1:99 (weight ratio)).

After mixing a sulfur-carbon composite (sulfur:porous carbon material=75:25 (weight ratio)) to the reduced graphene oxide dispersion, the result was dried to prepare a sulfur-carbon composite having a carbon coating layer including reduced graphene oxide coated on the surface. In the coated sulfur-carbon composite, the reduced graphene oxide content was 1% by weight.

95% by weight of the sulfur-carbon composite prepared above as a positive electrode active material and 5% by weight of styrene-butadiene rubber/carboxyl methyl cellulose (SBR:CMC=7:3, weight ratio) as a binder were mixed to prepare a positive electrode slurry composition.

The positive electrode slurry composition prepared as above was applied to a thickness of 250 µm on aluminum foil having a thickness of 20 µm, and then dried at 50°C for 12 hours to prepare a positive electrode.

The prepared positive electrode and a lithium metal negative electrode having a thickness of 40 µm were placed to face each other, and then after interposing a separator therebetween, an electrolyte (70 µℓ) was injected thereto to manufacture a lithium-sulfur battery.

In this case, polyethylene having a thickness of 16 µm and porosity of 46% was used as the separator, and as the electrolyte, a mixture solution obtained by dissolving LiFSI having a concentration of 0.75 M and 3% by weight of lithium nitrate in an organic solvent formed by mixing 2-methylfuran and dimethoxyethane in a volume ratio of 33:77 was used.

### [Example 5]

Reduced graphene oxide having a specific surface area of 1000 m²/g was dispersed into ethanol to prepare a reduced graphene oxide dispersion (reduced graphene oxide:ethanol=1:99 (weight ratio)).

After mixing a sulfur-carbon composite (sulfur:porous carbon material=75:25 (weight ratio)) to the reduced graphene oxide dispersion, the result was dried to prepare a sulfur-carbon composite having a carbon coating layer including reduced graphene oxide coated on the surface. In the coated sulfur-carbon composite, the reduced graphene oxide content was 1.5% by weight.

A lithium-sulfur battery was manufactured in the same manner as in Example 4, except that the sulfur-carbon composite prepared above was used as the positive electrode active material.

### [Example 6]

Reduced graphene oxide having a specific surface area of 1000 m²/g was dispersed into ethanol to prepare a reduced graphene oxide dispersion (reduced graphene oxide:ethanol=1:99 (weight ratio)).

After mixing a sulfur-carbon composite (sulfur:porous carbon material=75:25 (weight ratio)) to the reduced graphene oxide dispersion, the result was dried to prepare a sulfur-carbon composite having a carbon coating layer including reduced graphene oxide coated on the surface. In the coated sulfur-carbon composite, the reduced graphene oxide content was 3% by weight.

A lithium-sulfur battery was manufactured in the same manner as in Example 4, except that the sulfur-carbon composite prepared above was used as the positive electrode active material.

### [Comparative Example 1]

95% by weight of a sulfur-carbon composite (sulfur:porous carbon material=75:25 (weight ratio)) as a positive electrode active material and 5% by weight of styrene-butadiene rubber/carboxyl methyl cellulose (SBR:CMC=7:3, weight ratio) as a binder were mixed to prepare a positive electrode slurry composition.

The positive electrode slurry composition prepared as above was applied to a thickness of 250 µm on aluminum foil having a thickness of 20 µm, and then dried at 50°C for 12 hours to prepare a positive electrode.

The prepared positive electrode and a lithium metal negative electrode having a thickness of 40 µm were placed to face each other, and then after interposing a separator therebetween, an electrolyte (70 *µ*ℓ) was injected thereto to manufacture a lithium-sulfur battery.

In this case, polyethylene having a thickness of 16 µm and porosity of 46% was used as the separator, and as the electrolyte, a mixture solution obtained by dissolving LiFSI having a concentration of 0.75 M and 3% by weight of lithium nitrate in an organic solvent formed by mixing 2-methylfuran and dimethoxyethane in a volume ratio of 33:77 was used.

### [Comparative Example 2]

After dispersing reduced graphene oxide (specific surface area: 100 m²/g) into ethanol, a sulfur-carbon composite (sulfur:porous carbon material=75:25 (weight ratio)) having a carbon coating layer including reduced graphene oxide continuously formed on the entire surface was prepared.

A lithium-sulfur battery was manufactured in the same manner as in Comparative Example 1, except that the sulfur-carbon composite prepared above was used as the positive electrode active material.

### [Comparative Example 3]

Reduced graphene oxide having a specific surface area of 1000 m²/g was dispersed into ethanol to prepare a reduced graphene oxide dispersion (reduced graphene oxide:ethanol=1:99 (weight ratio)).

After mixing a sulfur-carbon composite (sulfur:porous carbon material=75:25 (weight ratio)) to the reduced graphene oxide dispersion, the result was dried to prepare a sulfur-carbon composite having a carbon coating layer including reduced graphene oxide coated on the surface. In the coated sulfur-carbon composite, the reduced graphene oxide content was 5% by weight.

A lithium-sulfur battery was manufactured in the same manner as in Comparative Example 1, except that the sulfur-carbon composite prepared above was used as the positive electrode active material.

### Experimental Example 1.

Specific surface area, pore volume, pore size, and average particle diameter of the positive electrode active materials used in the examples and the comparative examples were measured.

Specifically, the amount of nitrogen adsorption and desorption was measured using a specific surface area measuring device (model name: BELSORP-MINI, manufacturer: BEL Japan Inc.). An isothermal adsorption and desorption curve was obtained therethrough, and a specific surface area was calculated using the BET (Brunauer-Emmett-Teller) equation. In addition, pore volume and pore size distributions were measured by the BJH (Barrett-Joyner-Halenda) calculation. In addition, volume average particle diameter (MV), average particle diameter (D₁₀) and average particle diameter (D₅₀) were measured using a particle diameter distribution measuring device. Results obtained herein are shown in Tables 1 and 2.

**[Table 1]**

| | Example 1 | Example 2 | Example 3 | Comparative Example 1 | Comparative Example 2 | Comparative Example 3 |
|---|---|---|---|---|---|---|
| Specific Surface Area (m²/g) | 29.12 | 36.52 | 38.20 | 13.97 | 12.81 | 11.52 |
| Pore Volume (cm³/g) | 0.33 | 0.45 | 0.45 | 0.11 | 0.10 | 0.08 |
| Pore Size (nm) | 30-70 | 30-70 | 30-70 | 80-100 | - | - |

**[Table 2]**

| | Example 1 | Example 2 | Example 3 | Example 4 | Example 5 | Example 6 | Compar ative Example 1 | Compar ative Example 2 | Compar ative Example 3 |
|---|---|---|---|---|---|---|---|---|---|
| Volume Average Particle Diameter (µm) | 48.5 | 48.23 | 44.31 | 64.98 | 50.49 | 48.28 | 58.67 | 52.48 | 55.37 |
| Average Particle Diameter (D₁₀) (µm) | 18.4 | 17.52 | 14.89 | 18.28 | 14.36 | 10.57 | 20.17 | 18.17 | 18.3 |
| Average Particle Diameter (D₅₀) (µm) | 44.1 | 43.84 | 40.64 | 56.39 | 45.35 | 41.05 | 52.31 | 48.24 | 50.82 |

As described in Table 1 above, it can be confirmed that as the positive electrode active materials of the examples comprises a discontinuous carbon coating layer, it has improved specific surface area and pore volume, and decreased pore size, compared to the positive electrode active materials of the comparative examples including a pure sulfur-carbon composite without forming a carbon coating layer.

In addition, through Table 2, it is seen that the positive electrode active materials according to the examples had reduced volume average particle diameter and average particle diameter, compared to the positive electrode active materials of the comparative examples.

### Experimental Example 2.

The positive electrodes prepared in Examples 3 and 6 and Comparative Example 2 were observed using a scanning electron microscope (SEM). In this case, S-4800 of Hitachi, Ltd. was used as the scanning electron microscope, and results obtained herein are shown in FIGS. 2 to 4.

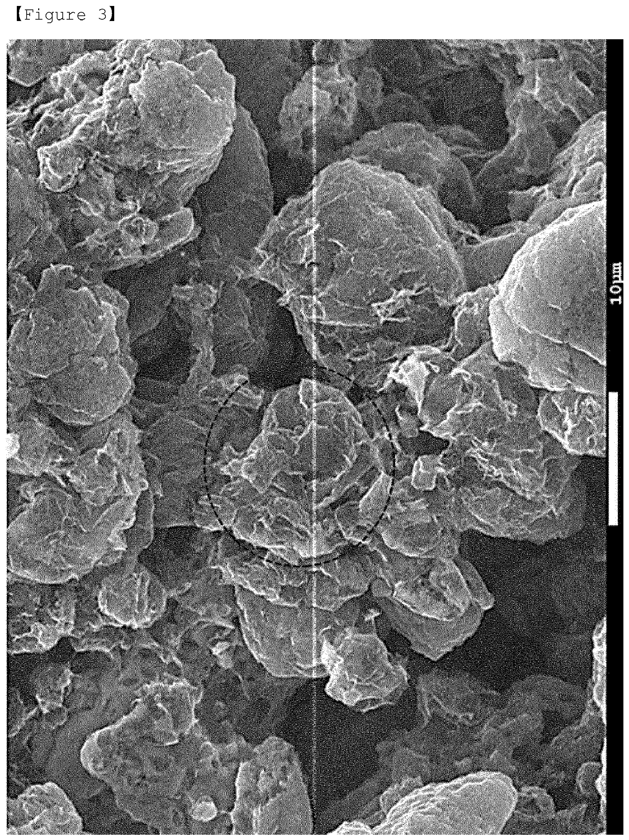

Referring to FIGS. 2 and 3, as the positive electrodes according to Examples 3 and 6 include a positive electrode active material in which a discontinuous island-shaped carbon coating layer is formed on the surface of the sulfur-carbon composite, it can be confirmed that the surface covered with reduced graphene oxide and the pores of the porous carbon material included in the sulfur-carbon composite are all visible, and a carbon bridge (area indicated by dotted line) therebetween is present.

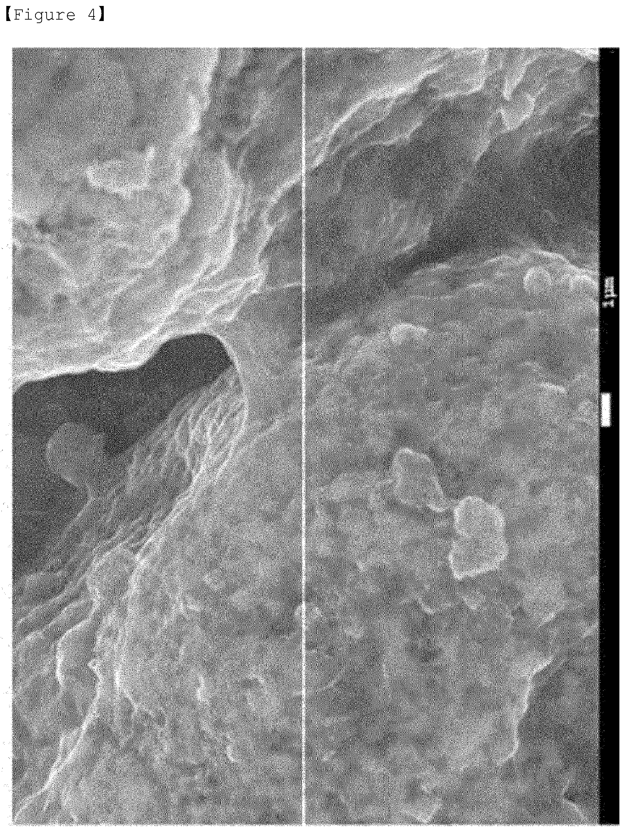

Meanwhile, it can be seen through FIG. 4 that when including a positive electrode active material in which a continuous carbon coating layer is formed on the entire surface of a sulfur-carbon composite as in Comparative Example 2, surface pores of the sulfur-carbon composite are completely covered by reduced graphene oxide included in the carbon coating layer.

### Experimental Example 3.

For the batteries manufactured in the examples and the comparative examples, capacity and cycle life characteristics were evaluated using a charge and discharge measuring device.

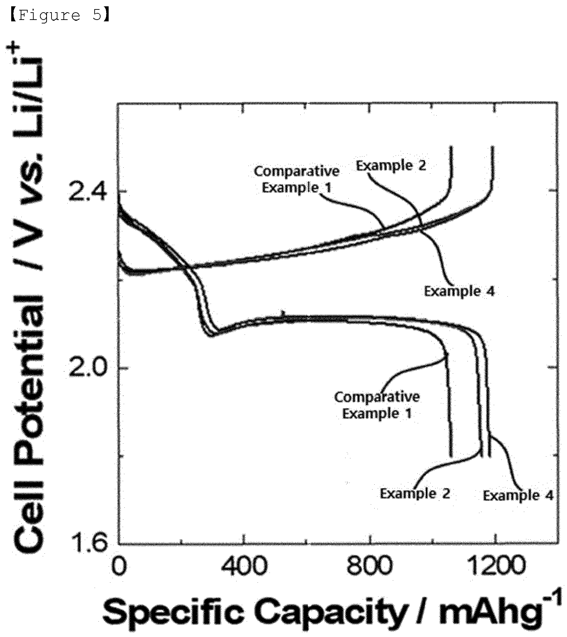

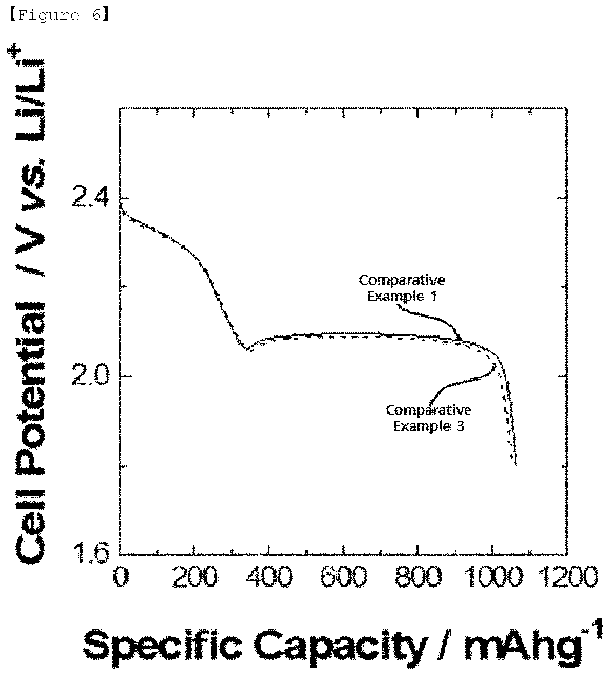

Specifically, capacity properties of the batteries were evaluated while discharging to 1.8 V with current density of 0.1 C and charging to 2.5 V with current density of 0.1 C at 25°C. Results obtained herein are shown in FIGS. 5 and 6.

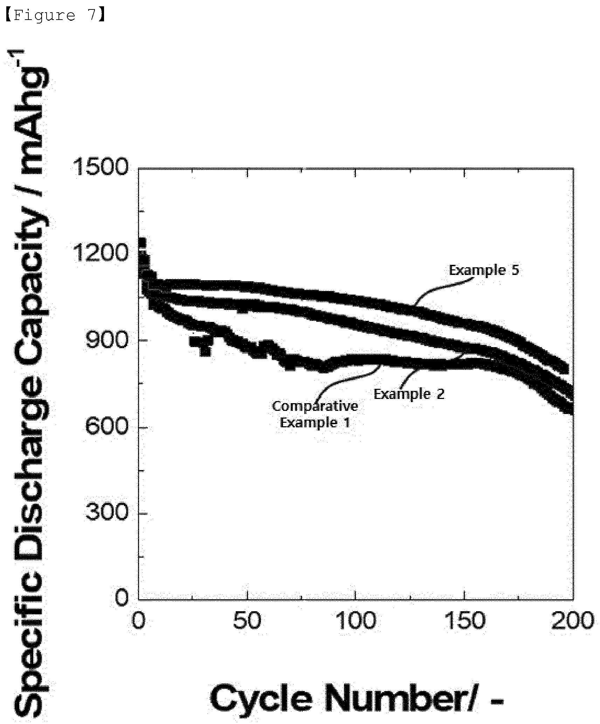

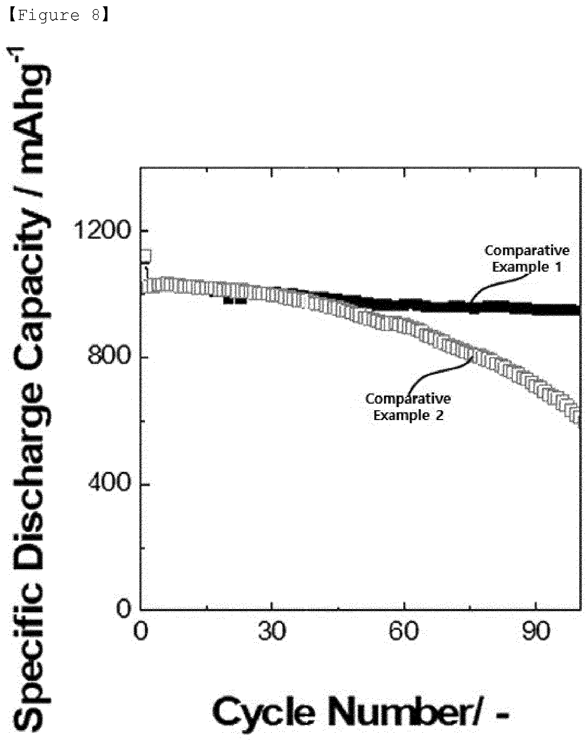

In addition, cycle life characteristics of the batteries were evaluated while repeating a process of discharging to 1.8 V with current density of 0.1 C and charging to 2.5 V with current density of 0.1 C at 25°C three times, then charging and discharging three times with current density of 0.2 C in the same voltage section, and discharging with current density of 0.3 C and charging with current density of 0.2 C. Results obtained herein are shown in Table 3, and FIGS. 7 and 8.

**[Table 3]**

| | Discharge Capacity (mAh/g) |
|---|---|
| Example 1 | 1145 |
| Example 2 | 1162 |
| Example 3 | 1178 |
| Example 4 | 1162 |
| Example 5 | 1183 |
| Example 6 | 1169 |
| Comparative Example 1 | 1050 |
| Comparative Example 2 | 1038 |
| Comparative Example 3 | 1045 |

Through FIGS. 4 and 5 and Table 3, it can be confirmed that the batteries according to the examples have excellent capacity properties, compared to the batteries of the comparative examples.

Specifically, referring to FIG. 5, the batteries of Examples 2 and 5 have initial discharge capacity of 1162 mAh/g and 1183 mAh/g, respectively, whereas the battery of Comparative Example 1 has initial discharge capacity of 1050 mAh/g, and therefore, it can be seen that the batteries of Examples 2 and 5 have excellent capacity and output properties due to improved discharge capacity.

In addition, it can be confirmed through FIG. 6 that when the carbon coating layer exceeds 3% by weight (Comparative Example 3), the specific surface area of the positive electrode active material is reduced, and thus the reactivity may be lowered compared to when the carbon coating layer is not formed (Comparative Example 1).

As shown in FIG. 7 and Table 3 above, it can be confirmed that the batteries according to Examples 1 to 6 not only exhibit improved discharge capacity, but also have excellent properties of maintaining the improved discharge capacity compared to the battery according to Comparative Example 1.

In addition, as shown in FIG. 8, when the positive electrode active material having a continuous carbon coating layer formed on the entire surface of the sulfur-carbon composite is included like the positive electrode of Comparative Example 2, it can be seen that it has a similar level of an initial discharge capacity to that of Comparative Example 1, but the pore structure of the porous carbon material included in the sulfur-carbon composite cannot be utilized, so that the discharge capacity rapidly deteriorates as the cycle progresses, and the cycle life characteristic is inferior.

### [Description of Symbol]

- 11:: Sulfur-Carbon Composite
- 13:: Carbon Coating Layer
- 15:: Carbon Bridge

## Claims

1. A positive electrode for a lithium-sulfur battery, comprising:
a positive electrode current collector; and
a positive electrode active material layer positioned on at least one surface of the positive electrode current collector,
wherein the positive electrode active material layer comprises a sulfur-carbon composite having a plurality of island-shaped carbon coating layers on its surface as a positive electrode active material;
each of the plurality of island-shaped carbon coating layers comprises reduced graphene oxide; and
the island shape means a form in which the carbon coating layer is discontinuously separated and distributed like an island on the surface of the sulfur-carbon composite surface.

2. The positive electrode for a lithium-sulfur battery according to claim 1, wherein the reduced graphene oxide has a specific surface area of 700 m²/g or more.

3. The positive electrode for a lithium-sulfur battery according to claim 2, wherein the reduced graphene oxide has a specific surface area of 700 to 1500 m²/g.

4. The positive electrode for a lithium-sulfur battery according to claim 1, wherein the reduced graphene oxide is included in an amount of 0.5 to 3% by weight, based on the total weight of the positive electrode active material.

5. The positive electrode for a lithium-sulfur battery according to claim 1, wherein the positive electrode active material has a specific surface area of 20 to 50 m²/g measured as set forth in the description.

6. The positive electrode for a lithium-sulfur battery according to claim 1, wherein the positive electrode active material has a pore volume of 0.3 to 0.5 cm³/g measured as set forth in the description.

7. The positive electrode for a lithium-sulfur battery according to claim 1, wherein a pore size in the positive electrode active material is 30 to 70 nm measured as set forth in the description.

8. The positive electrode for a lithium-sulfur battery according to claim 1, wherein a ratio of a specific surface area of the positive electrode active material relative to a specific surface area of a sulfur-carbon composite that does not include a carbon coating layer is 1 to 3.

9. The positive electrode for a lithium-sulfur battery according to claim 1, wherein the positive electrode active material layer further comprises a carbon bridge connecting the positive electrode active materials; wherein the carbon bridge is an aggregate of reduced graphene oxide failing to form the carbon coating layer on the sulfur-carbon composite surface.

10. The positive electrode for a lithium-sulfur battery according to claim 9, wherein the carbon bridge is a crumpled structure or has a fibrous shape.

11. A method for preparing a positive electrode for a lithium-sulfur battery, comprising steps of:
preparing a reduced graphene oxide dispersion by dispersing reduced graphene oxide into a dispersion medium;
preparing a sulfur-carbon composite having a plurality of island-shaped carbon coating layers on its surface by mixing the reduced graphene oxide dispersion and a sulfur-carbon composite and drying a mixture;
preparing a positive electrode slurry composition including the sulfur-carbon composite having the plurality of island-shaped carbon coating layers; and
applying the positive electrode slurry composition on at least one surface of a positive electrode current collector to obtain the positive electrode of claim 1.

12. The method for preparing a positive electrode for a lithium-sulfur battery according to claim 11, wherein the dispersion medium comprises a lower alcohol.

13. A method for preparing a positive electrode for a lithium-sulfur battery, comprising steps of:
preparing a pre-dispersion including reduced graphene oxide;
preparing a positive electrode slurry composition by adding the pre-dispersion to a mixture including a sulfur-carbon composite and a binder; and
applying the positive electrode slurry composition on at least one surface of a positive electrode current collector to obtain the positive electrode of claim 1.

14. A lithium-sulfur battery comprising:
the positive electrode for a lithium-sulfur battery according to claim 1;
a negative electrode; and
an electrolyte.

## Patentansprüche

1. Positive Elektrode für eine Lithium-Schwefel-Batterie, umfassend:
einen Stromabnehmer der positiven Elektrode; und
eine Aktivmaterialschicht der positiven Elektrode, die auf mindestens einer Oberfläche des Stromabnehmers der positiven Elektrode positioniert ist,
wobei die Aktivmaterialschicht der positiven Elektrode einen Schwefel-Kohlenstoff-Verbundstoff umfasst, der eine Vielzahl von inselförmigen Kohlenstoffbeschichtungsschichten auf seiner Oberfläche als Aktivmaterial der positiven Elektrode aufweist;
jede der Vielzahl von inselförmigen Kohlenstoffbeschichtungsschichten reduziertes Graphenoxid umfasst; und
die Inselform eine Form bedeutet, in der die Kohlenstoffbeschichtungsschicht diskontinuierlich getrennt und wie eine Insel auf der Oberfläche der Schwefel-Kohlenstoff-Verbundstoffoberfläche verteilt ist.

2. Positive Elektrode für eine Lithium-Schwefel-Batterie nach Anspruch 1, wobei das reduzierte Graphenoxid eine spezifische Oberfläche von 700 m² /g oder mehr aufweist.

3. Positive Elektrode für eine Lithium-Schwefel-Batterie nach Anspruch 2, wobei das reduzierte Graphenoxid eine spezifische Oberfläche von 700 bis 1500 m² /g aufweist.

4. Positive Elektrode für eine Lithium-Schwefel-Batterie nach Anspruch 1, wobei das reduzierte Graphenoxid in einer Menge von 0,5 bis 3 Gew.-%, bezogen auf das Gesamtgewicht des Aktivmaterials der positiven Elektrode, enthalten ist.

5. Positive Elektrode für eine Lithium-Schwefel-Batterie nach Anspruch 1, wobei das Aktivmaterial der positiven Elektrode eine spezifische Oberfläche von 20 bis 50 m² /g, gemessen wie in der Beschreibung dargelegt, aufweist.

6. Positive Elektrode für eine Lithium-Schwefel-Batterie nach Anspruch 1, wobei das Aktivmaterial der positiven Elektrode ein Porenvolumen von 0,3 bis 0,5 cm³ /g, gemessen wie in der Beschreibung dargelegt, aufweist.

7. Positive Elektrode für eine Lithium-Schwefel-Batterie nach Anspruch 1, wobei eine Porengröße in dem Aktivmaterial der positiven Elektrode 30 bis 70 nm, gemessen wie in der Beschreibung dargelegt, beträgt.

8. Positive Elektrode für eine Lithium-Schwefel-Batterie nach Anspruch 1, wobei ein Verhältnis einer spezifischen Oberfläche des Aktivmaterials der positiven Elektrode relativ zu einer spezifischen Oberfläche eines Schwefel-Kohlenstoff-Verbundstoffs, der keine Kohlenstoffbeschichtungsschicht enthält, 1 bis 3 beträgt.

9. Positive Elektrode für eine Lithium-Schwefel-Batterie nach Anspruch 1, wobei die Aktivmaterialschicht der positiven Elektrode ferner eine Kohlenstoffbrücke umfasst, die die Aktivmaterialien der positiven Elektrode verbindet; wobei die Kohlenstoffbrücke ein Aggregat aus reduziertem Graphenoxid ist, das die Kohlenstoffbeschichtungsschicht auf der Schwefel-Kohlenstoff-Verbundstoffoberfläche nicht bildet.

10. Positive Elektrode für eine Lithium-Schwefel-Batterie nach Anspruch 9, wobei die Kohlenstoffbrücke eine zerknitterte Struktur ist oder eine Faserform aufweist.

11. Verfahren zur Herstellung einer positiven Elektrode für eine Lithium-Schwefel-Batterie, umfassend die Schritte:
Herstellen einer reduzierten Graphenoxiddispersion durch Dispergieren von reduziertem Graphenoxid in einem Dispersionsmedium;
Herstellen eines Schwefel-Kohlenstoff-Verbundstoffs, der eine Vielzahl von inselförmigen Kohlenstoffbeschichtungsschichten auf seiner Oberfläche aufweist, durch Mischen der reduzierten Graphenoxiddispersion und eines Schwefel-Kohlenstoff-Verbundstoffs und Trocknen einer Mischung;
Herstellen einer Aufschlämmungszusammensetzung der positiven Elektrode, die den Schwefel-Kohlenstoff-Verbundstoff enthält, der die Vielzahl von inselförmigen Kohlenstoffbeschichtungsschichten aufweist; und
Aufbringen der Aufschlämmungszusammensetzung der positiven Elektrode auf mindestens eine Oberfläche eines Stromabnehmers der positiven Elektrode, um die positive Elektrode nach Anspruch 1 zu erhalten.

12. Verfahren zur Herstellung einer positiven Elektrode für eine Lithium-Schwefel-Batterie nach Anspruch 11, wobei das Dispersionsmedium einen niederen Alkohol umfasst.

13. Verfahren zur Herstellung einer positiven Elektrode für eine Lithium-Schwefel-Batterie, umfassend die Schritte:
Herstellen einer Vordispersion, die reduziertes Graphenoxid enthält;
Herstellen einer Aufschlämmungszusammensetzung der positiven Elektrode durch Zugeben der Vordispersion zu einer Mischung, die einen Schwefel-Kohlenstoff-Verbundstoff und ein Bindemittel enthält; und
Aufbringen der Aufschlämmungszusammensetzung der positiven Elektrode auf mindestens eine Oberfläche eines Stromabnehmers der positiven Elektrode, um die positive Elektrode nach Anspruch 1 zu erhalten.

14. Lithium-Schwefel-Batterie, umfassend:
die positive Elektrode für eine Lithium-Schwefel-Batterie nach Anspruch 1;
eine negative Elektrode; und
einen Elektrolyten.

## Revendications

1. Électrode positive pour une batterie au lithium-soufre, comprenant :
un collecteur de courant d'électrode positive ; et
une couche de matériau actif d'électrode positive positionnée sur au moins une surface du collecteur de courant d'électrode positive,
dans laquelle la couche de matériau actif d'électrode positive comprend un composite de soufre-carbone ayant une pluralité de couches de revêtement de carbone en forme d'îlot sur sa surface étant un matériau actif d'électrode positive ;
chaque couche de la pluralité de couches de revêtement de carbone en forme d'îlot comprend de l'oxyde de graphène réduit ; et
la forme d'îlot indique une forme où la couche de revêtement de carbone est séparée de manière discontinue et répartie comme un îlot sur la surface de la surface de composite de soufre-carbone.

2. Électrode positive pour une batterie au lithium-soufre selon la revendication 1, dans laquelle l'oxyde de graphène réduit a une surface spécifique égale ou supérieure à 700 m²/g.

3. Électrode positive pour une batterie au lithium-soufre selon la revendication 2, dans laquelle l'oxyde de graphène réduit a une surface spécifique de 700 à 1500 m²/g.

4. Électrode positive pour une batterie au lithium-soufre selon la revendication 1, dans laquelle l'oxyde de graphène réduit est inclus dans une quantité de 0,5 à 3 % en poids, sur la base du poids total du matériau actif d'électrode positive.

5. Électrode positive pour une batterie au lithium-soufre selon la revendication 1, dans laquelle le matériau actif d'électrode positive a une surface spécifique de 20 à 50 m²/g, mesurée comme décrit dans la description.

6. Électrode positive pour une batterie au lithium-soufre selon la revendication 1, dans laquelle le matériau actif d'électrode positive a un volume de pores de 0,3 à 0,5 cm³/g, mesuré comme décrit dans la description.

7. Électrode positive pour une batterie au lithium-soufre selon la revendication 1, dans laquelle une taille de pore dans le matériau actif d'électrode positive est 30 à 70 nm, mesurée comme décrit dans la description.

8. Électrode positive pour une batterie au lithium-soufre selon la revendication 1, dans laquelle un rapport d'une surface spécifique du matériau actif d'électrode positive à une surface spécifique d'un composite de soufre-carbone qui n'inclut pas une couche de revêtement de carbone est 1 à 3.

9. Électrode positive pour une batterie au lithium-soufre selon la revendication 1, dans laquelle la couche de matériau actif d'électrode positive comprend en outre un pont de carbone reliant les matériaux actifs d'électrode positive ; dans laquelle le pont de carbone est un agrégat d'oxyde de graphène réduit qui ne forme pas la couche de revêtement de carbone sur la surface de composite de soufre-carbone.

10. Électrode positive pour une batterie au lithium-soufre selon la revendication 9, dans laquelle le pont de carbone est une structure froissée ou a une forme fibreuse.

11. Procédé de préparation d'une électrode positive pour une batterie au lithium-soufre, comprenant les étapes consistant à :
préparer une dispersion d'oxyde de graphène réduit en dispersant l'oxyde de graphène réduit dans un milieu de dispersion ;
préparer un composite de soufre-carbone ayant une pluralité de couches de revêtement de carbone en forme d'îlot sur sa surface en mélangeant la dispersion d'oxyde de graphène réduit et un composite de soufre-carbone et en séchant un mélange ;
préparer une composition de suspension d'électrode positive incluant le composite de soufre-carbone ayant la pluralité de couches de revêtement de carbone en forme d'îlot ; et
appliquer la composition de suspension d'électrode positive sur au moins une surface d'un collecteur de courant d'électrode positive pour obtenir l'électrode positive selon la revendication 1.

12. Procédé de préparation d'une électrode positive pour une batterie au lithium-soufre selon la revendication 11, dans lequel le milieu de dispersion comprend un alcool inférieur.

13. Procédé de préparation d'une électrode positive pour une batterie au lithium-soufre, comprenant les étapes consistant à :
préparer une pré-dispersion incluant de l'oxyde de graphène réduit ;
préparer une composition de suspension d'électrode positive en ajoutant la pré-dispersion à un mélange incluant un composite de soufre-carbone et un liant ; et
appliquer la composition de suspension d'électrode positive sur au moins une surface d'un collecteur de courant d'électrode positive pour obtenir l'électrode positive selon la revendication 1.

14. Batterie au lithium-soufre comprenant :
une électrode positive pour une batterie au lithium-soufre selon la revendication 1 ;
une électrode négative ; et
un électrolyte.
